# EUROPÄISCHE PATENTSCHRIFT

(11) **EP 1 184 648 B1**
(45) Veröffentlichungstag und Bekanntmachung des Hinweises auf die Patenterteilung: **28.05.2003**
(21) Anmeldenummer: 00118776.4
(22) Anmeldetag: 30.08.2000
(51) Int. Cl.: G01G 13/16

(54) **Ausgabevorrichtung für ein Produktbereitstellungssystem**
Dispensing device for a product delivery system
Distributeur pour un système de distribution de produit

(43) Veröffentlichungstag der Anmeldung: 06.03.2002
(73) Patentinhaber: MULTIPOND WÄGETECHNIK GMBH, D-84470 Waldkraiburg (DE)
(72) Erfinder: Schmidhuber, Josef, 84559 Kraiburg (DE)
(74) Vertreter: Prüfer, Lutz H., Dipl.-Phys.

(56) Entgegenhaltungen:
- DE-A- 19 808 474
- GB-A- 2 131 963
- US-A- 4 616 722
- US-A- 4 874 048

## Beschreibung

Die vorliegende Erfindung bezieht sich auf eine Produktausgabevorrichtung für ein Produktbereitstellungssystem wie ein Wiegesystem nach dem Oberbegriff des Anspruchs 1.

Bei der Befüllung von leeren Verpackungen wie Beuteln, tiefgezogenen Bechern, Dosen oder ähnlichem zum Beispiel zur Herstellung von Fertigmahlzeiten o.ä. arbeiten moderne Verpakkungsmaschinen mit so hohen Geschwindigkeiten, daß es kaum noch möglich ist, die zu füllenden Verpackungsbehälter in der kurzen verfügbaren Zeit zuverlässig mit bestimmten Produktmengen, die zum Beispiel durch Wiegen, Zählen, zeitgesteuertes Dosieren, o.ä. erhalten worden sind, zu befüllen.

Um die Produktmengen, die in die Verpackungsbehälter zu füllen sind, bereit zu stellen, werden zum Beispiel eine entsprechende Anzahl herkömmlicher Abfüllwaagen oder eine Kombinationswaage verwendet. In beiden Fällen müssen in räumlich getrennten Wägebehältern der entsprechenden herkömmlichen Waagen oder der Kombinationswaage bereitliegende, abgewogene Produktmengen der Einfüllstelle der Verpackungsmaschine zugeführt werden.

Aus der EP 0 979 393 ist eine Produktausgabevorrichtung mit bewegbaren Auffangbehältern nach dem Oberbegriff des Anspruchs 1 bekannt. Hier wird durch entsprechende Anordnung der Sammeltrichter ein Auseinanderziehen des abzufüllenden Produktes vermieden. Ein Aussortieren von Fehlmengen ist jedoch nicht möglich.

Die EP 0 113 586 B1 offenbart eine Produktausgabevorrichtung für ein Produktbereitstellungssystem für ein Wiegesystem in Form einer Kombinationswaage. Bei der Produktausgabevorrichtung sind die beiden Auffangbehälter feststehend über der Einfüllöffnung der Produktempfangsvorrichtung der Verpackungsmaschine angeordnet. Die beiden Auffangbehälter weisen jeweils zwei Längswände auf, von denen jeweils eine relativ zu der anderen Längswand zum Öffnen des Auffangbehälters zum Entleeren einer gewogenen Produktmenge in die Einfüllöffnung der Verpakkungsmaschine in Richtung der Mittelachse der Einfüllöffnung schwenkbar ist. Im geschlossenen Zustand eines Auffangbehälters begrenzen die Längswände einen sich nach unten verjüngenden Innenraum. Bei der Entleerung eines Auffangbehälters wird dessen schwenkbare Längswand nach innen über die Mittelachse der Einfüllöffnung geschwenkt. Die in dem Auffangbehälter bereitliegende, gewogene Produktmenge wird unter dem Einfluß der Gravitation beschleunigt. Beim Ausgeben erfährt die Produktmenge zusätzlich durch die nicht weggeschwenkte, schräge Längswand auch eine quer zu der Gravitationsbeschleunigung wirkende Beschleunigung. Daher wird die Produktmenge bereits beim Ausgeben aus dem Auffangbehälter auseinandergezogen.

Aus der CH 428 543 ist eine Produktausgabevorrichtung für ein Produktbereitstellungssystem bekannt, die eine erste Produktzuführvorrichtung mit einem zugehörigen ersten Auffangbehälter und eine zweite Produktzuführvorrichtung mit einem zugehörigen zweiten Auffangbehälter, wobei die Auffangbehälter an ihrer Unterseite jeweils einen Verschluß aufweisen, aufweist und über das Produktbereitstellungssystem bereitgestellte Produktmengen an eine Produktempfangsvorrichtung ausgibt, wobei die Produktempfangsvorrichtung aus einer Mehrzahl von auf einer Kreisbahn unter den Produktzuführvorrichtungen umlaufenden Fülltrichtern besteht. Das Öffnen eines der Auffangbehälter erfolgt dann, wenn sich einer der umlaufenden Fülltrichter unter ihm befindet. Das Entleeren eines Fülltrichters erfolgt im weiteren Umlauf dann, wenn die Ausgangsöffnung des Fülltrichters, die einen Klappenverschluß aufweist, mit der Öffnung einer zu füllenden Packung zur Dekkung gelangt ist. Eine Produktempfangsvorrichtung, in die mehrere Produktzuführvorrichtungen entsprechende Produktmengen ausgeben, wird nicht offenbart.

Aus der DE 38 23 329 C2 ist ein Waagenbehälter mit einem Doppelklappenverschluß bekannt, der eine im wesentlichen längs seiner Längsachse spitz zulaufende Form aufweist.

Es ist Aufgabe der vorliegenden Erfindung, auf kostengünstige Weise zu verhindern, daß mit Fehlmengen befüllte Behälter ausgeliefert werden.

Diese Aufgabe wird gelöst durch eine Produktausgabevorrichtung nach Anspruch 1.

Weiterbildungen der Erfindung sind in den abhängigen Ansprüchen angegeben.

Weitere Merkmale und Zweckmäßigkeiten ergeben sich aus der Beschreibung von Ausführungsbeispielen anhand der Figuren. Von den Figuren zeigen:
- Fig. 1: eine erste Ausführungsform der Erfindung mit einer Auffangbehälteranordnung in einer ersten Stellung, und
- Fig. 2: die Ausführungsform aus Fig. 1 mit der Auffangbehälteranordnung in einer zweiten Stellung
- Fig. 3: eine Detail-Darstellung der ersten Ausführungsform der Erfindung in einer ersten Stellung mit geschlossenen Verschlußklappen, und
- Fig. 4: eine Detail-Darstellung der Ausführungsform aus Fig. 3 in der ersten Stellung mit zwei geöffneten Verschlußklappen.

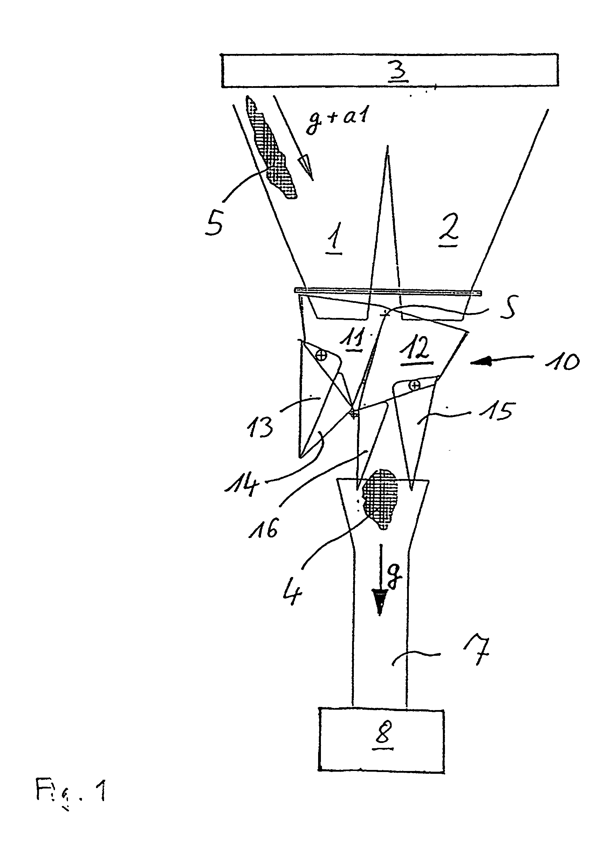

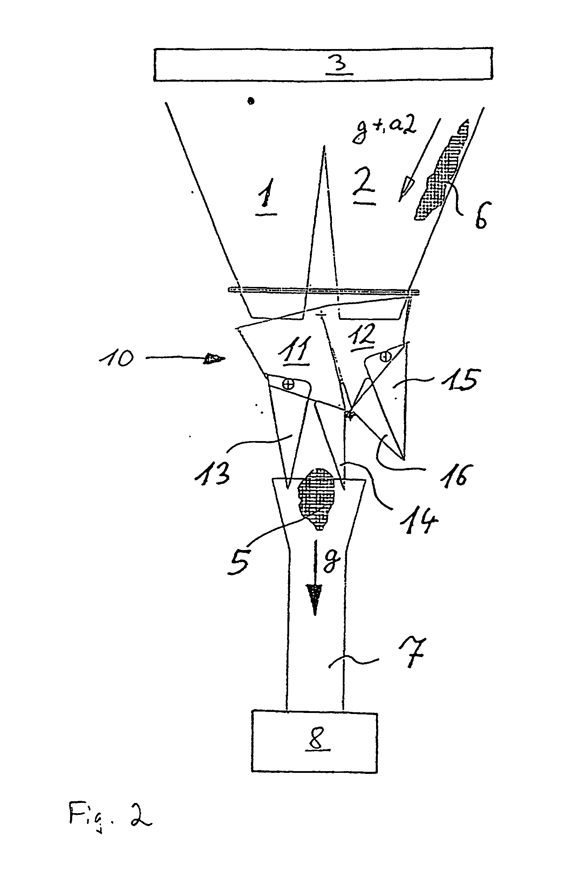

In den Fig. 1 und 2 ist eine erste Ausführungsform der Produktausgabevorrichtung gezeigt. In Fig. 1 und 2 sind ein Wiegesystem 3 als Beispiel eines Produktbereitstellungssystems, das z.B. als Kombinationswaage oder auch als Zählmaschine, Dosiermaschine, o.ä. ausgebildet sein kann, und eine Verpackungsmaschine 8 als Blöcke dargestellt. Soweit in der folgenden Beschreibung die Begriffe oben, unten, horizontal, senkrecht, o.ä. verwendet werden, sind die entsprechenden Orientierungen in Betriebsstellung der Vorrichtung gemeint. Die Produktausgabevorrichtung der ersten Ausführungsform weist eine erste und eine zweite Produktzuführvorrichtung 1, 2 auf, die jeweils wenigstens in ihrem unteren Abschnitt als Sammeltrichter ausgebildet sind. Die Sammeltrichter 1, 2 weisen jeweils an ihrer Unterseite Auslaßöffnungen auf, die horizontal nebeinander mit einem Abstand voneinander angeordnet sind. Ein erster Auffangbehälter 11 ist unter der Auslaßöffnung des ersten Sammeltrichters 1 angeordnet und ein zweiter Auffangbehälter 12 ist unter der Auslaßöffnung des zweiten Sammeltrichters 2 angeordnet.

Die beiden Auffangbehälter 11, 12 weisen bei der gezeigten ersten Ausführungsform eine sich nach unten verjüngende Form des Innenraums auf. Jeder der Auffangbehälter 11, 12 weist in seinem unteren Teil einen Verschluß auf, der jeweils von zwei Verschlußklappen 13, 14 bzw. 15, 16 gebildet wird. Die Verschlußklappen 13, 14 bzw. 15, 16 begrenzen jeweils einen Innenraum, der eine sich nach unten verjüngende Form aufweist, die bei der ersten Ausführungsform genauer gesagt eine nach unten spitz zulaufende, annähernd rotationssymmetrische Form ist. Die beiden einen Verschluß bildenden Verschlußklappen 13, 14 bzw. 15, 16 sind zum Öffnen und Schließen des Verschlusses relativ zueinander schwenkbar. Die Verschlußklappen können mit hoher Beschleunigung bzw. Geschwindigkeit geschwenkt werden können. Im geöffneten Zustand des Verschlusses begrenzen die Verschlußklappen jeweils einen Öffnungsquerschnitt einer vorbestimmten runden Form mit einem ersten Durchmesser. Es sind bei anderen Ausführungsformen aber auch andere sich nach unten verjüngende Formen wie umgekehrte Pyramiden oder Kegel oder andere sich wenigstens in einer horizontalen Abmessung nach unten verjüngende Formen möglich.

Bei der in den Fig. 1 und 2 gezeigten ersten Ausführungsform bilden die Auffangbehälter 11, 12 eine Auffangbehälteranordnung 10, die um eine horizontale Hauptschwenkachse 18, die mittig zwischen den beiden Auffangbehältern und mittig zwischen den beiden Auslaßöffnungen angeordnet ist, durch eine nicht dargestellte Antriebsvorrichtung in eine erste und eine zweite Stellung schwenkbar ist. In der in Fig. 1 gezeigten ersten Stellung der Auffangbehälteranordnung 10 ist der zweite Auffangbehälter 12 in einer Ausgabestellung über einer Produktempfangsvorrichtung 7 der Verpackungsmaschine 8 positioniert. Die Produktempfangsvorrichtung 7 ist als ein senkrecht ausgerichtetes Einfüllrohr mit einem vorgegebenen runden Querschnitt mit einem zweiten Durchmesser ausgebildet. Bei der in Fig. 2 gezeigten zweiten Stellung der Auffangbehälteranordnung 10 ist der erste Auffangbehälter 11 in einer entsprechenden Ausgabestellung über dem Öffnungsquerschnitt der Produktempfangsvorrichtung 7 positioniert. In der Ausgabestellung sind der Verschluß des entsprechenden Auffangbehälters 11, 12 und der Öffnungsquerschnitt der Produktempfangsvorrichtung 7 im wesentlichen mittig zueinander ausgerichtet, d.h. der erste und der zweite Durchmesser sind in senkrechter Richtung (d.h. in Richtung der Gravitationsbeschleunigung g) im wesentlichen zentriert. Obwohl bei der ersten Ausführungsform die Auffangbehälter 11, 12 integraler Bestandteil einer Auffangbehälteranordnung 10 sind, können die Auffangbehälter ebenso als separate Auffangbehälter, die unabhängig voneinander aber koordiniert um jeweilige Schwenkachsen durch entsprechende Antriebsvorrichtungen in entsprechende Ausgabestellungen über der Produktempfangsvorrichtung 7 geschwenkt werden, ausgebildet sein.

Das Wiegesystem 3 gibt gewogene Produktmengen 4, 5, 6 in die erste oder die zweite Produktzuführvorrichtung 1, 2 aus. Die gewogenen Produktmengen 4, 5, 6, die von dem Wiegesystem ausgegeben werden, bestehen aus einer Menge von einzelnen Produktteilen wie Zuckerkristallkörnern, Bonbons, Tomaten o.ä. und rutschen, gleiten oder rollen entlang der Wand des entsprechenden Sammeltrichters 1, 2 unter der Wirkung durch die Gravitationsbeschleunigung g und einer zusätzlichen Querbeschleunigung a1 bzw. a2, die durch die Sammeltrichterwand verursacht wird, in den ersten bzw. zweiten Auffangbehälter 11, 12.

Die von dem Wiegesystem 3 abgegebenen, gewogenen Produktmengen 4, 5, 6 werden in den Auffangbehältern 11 bzw. 12 mit geschlossenem Verschluß so aufgefangen, daß die durch die Sammeltrichterwand auseinandergezogenen Produktmengen durch den sich verjüngenden Innenraum wieder in eine kompakte Form gesammelt werden. Die in einem Auffangbehälter 11, 12 aufzufangende Produktmenge 4, 5, 6 ist dabei so bemessen, daß sie in der kompakten Form nur in Kontakt mit den Verschlußklappen 13, 14, 15, 16 aber nicht mit den feststehenden Wänden der Auffangbehälter 11, 12 ist.

Die Auffangbehälter 11, 12 sind derart angeordnet, daß die Auslaßöffnung des entsprechenden Sammeltrichters 1, 2 in Richtung der Gravitationsbeschleunigung g immer innerhalb des Umfangs der oberen Öffnung des Auffangbehälters positioniert ist, so daß sie sowohl ihrer Ausgabestellung über der Produktempfangsvorrichtung 7 als auch in einer anderen Stellung eine gewogene Produktmenge 4, 5, 6, die von dem Wiegesystem 3 ausgegeben wird, empfangen können. Abhängig von der notwendigen Rate, mit der gewogene Produktmengen in die Verpackungsmaschine 8 abzugeben sind, kann daher z.B. bei der in Fig. 1 gezeigten Stellung des zweiten Auffangbehälters 12 von dem Wiegesystem 3 bereits eine weitere gewogene Produktmenge in den Sammeltrichter 2 abgegeben werden, die dann, abhängig von der Fall- bzw. Gleitgeschwindigkeit in dem Sammeltrichter 2 erst dann in dem Auffangbehälter 12 ankommt, wenn bei diesem durch Schwenken der Verschlußklappen 15, 16 der Verschluß bereits wieder geschlossen ist.

Es wird nun auf Fig. 1 Bezug genommen, in der gut zu erkennen ist, daß durch die im wesentlichen mittige Anordnung des Verschlusses des Auffangbehälters 12 über dem Öffnungsquerschnitt der Produktempfangsvorrichtung 7 ein Ausgeben bzw. Abwerfen der gewogenen Produktmenge 4 aus dem Auffangbehälter 12 ohne nachfolgenden Kontakt mit der Wand der Produktempfangsvorrichtung 7 möglich ist. Dieses wird im wesentlichen durch die mittige Anordnung des Verschlusses des Auffangbehälters 12 erreicht. Durch das schnelle Aufschwenken der Verschlußklappen 13, 14 bzw. 15, 16 jeweils weg von der Symmetrieachse erfährt die ausgegebene Produktmenge 4, 5 außer der Gravitationsbeschleunigung g im wesentlichen keine andere Beschleunigung. Durch das schnelle Wegschwenken der Verschlußklappen 13, 14 bzw. 15, 16 wird außerdem erreicht, daß kein Auseinanderziehen des Produktes durch ein Rutschen oder Gleiten entlang der Innenseiten der Verschlußklappen erfolgt. Das Vermeiden einer Querbeschleunigung der gewogenen Produktmenge 4 beim Ausgeben aus dem Auffangbehälter 12 führt dazu, daß der Querschnitt der kompakten Form, in der die gewogene Produktmenge 4 aus dem Auffangbehälter 12 abgeben wird, der jedenfalls kleiner oder gleich dem Öffnungsquerschnitt des geöffneten Verschlusses ist, und der Öffnungsquerschnitt der Produktempfangsvorrichtung 7 optimal aufeinander abgestimmt werden können. Bei der ersten Ausführungsform weist der entsprechende runde Öffnungsquerschnitt des geöffneten Verschlusses des Auffangbehälters den entsprechenden ersten Durchmesser auf, der geringfügig kleiner als der zweite Durchmesser des runden Öffnungsquerschnitts des Einfüllrohres 7 gewählt ist. Alternativ kann bei einem z. B. rechteckigen Öffnungsquerschnitt des Einfüllrohres 7 der Öffnungsquerschnitt des Verschlusses ebenfalls rechteckig gewählt sein.

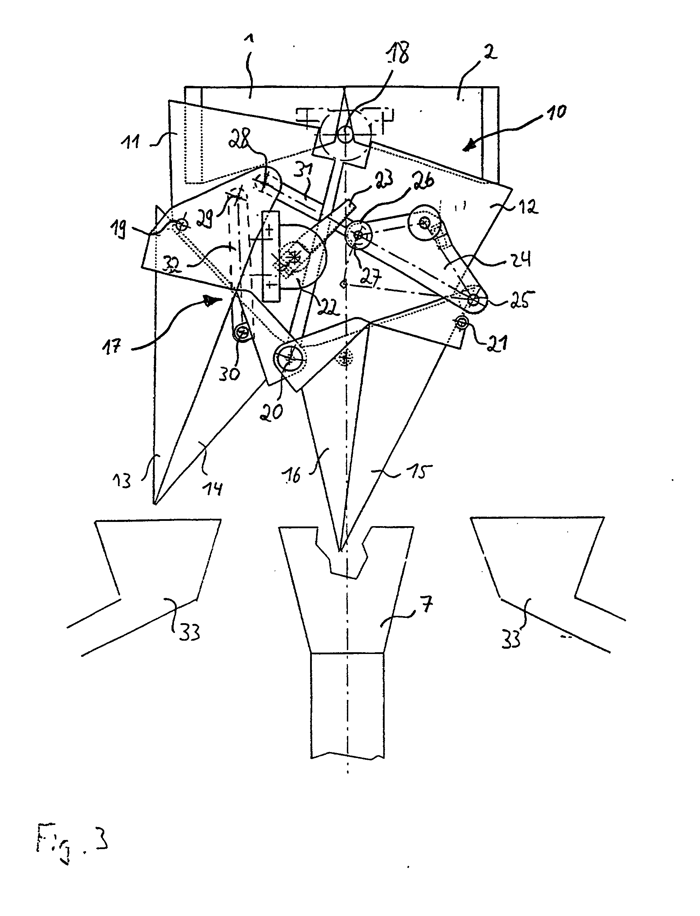

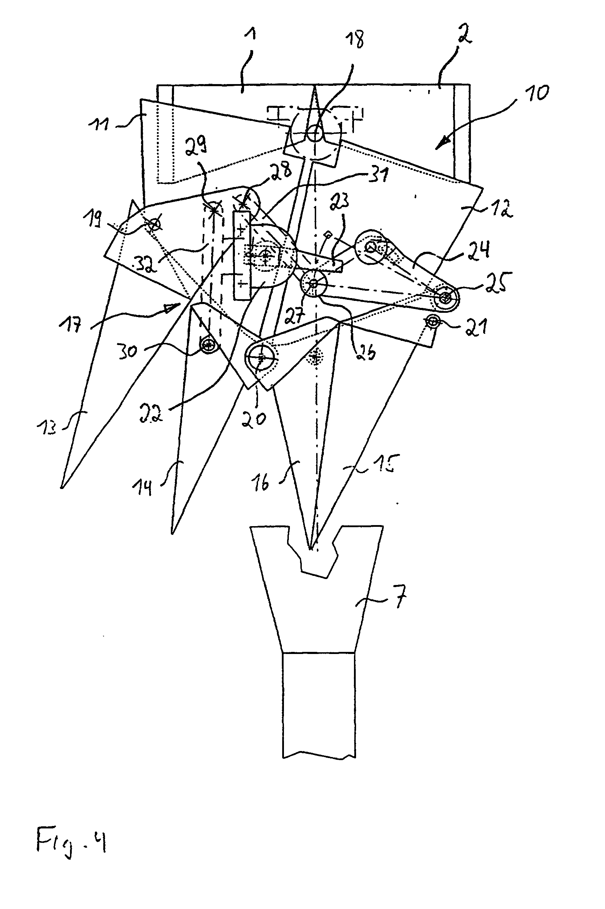

In Fig. 3 und Fig. 4 ist die erste Stellung der Auffangbehälteranordnung 10 zu sehen. Diese erste Stellung sei definiert als die Ausgabestellung des Auffangbehälters 2 und gleichzeitig als Aufnahme- bzw. Aussonderstellung des Auffangbehälters 1. Der erste Auffangbehälter 1 mit seinen beiden Verschlußklappen 13, 14 ist in dieser Stellung der Auffangbehälteranordnung 10 seitlich nach links weggeschwenkt. Die in Fig. 3 und Fig. 4 nicht gezeigte zweite Stellung der Auffangbehälteranordnung 10 sei definiert als die Ausgabestellung des Auffangbehälters 1 und gleichzeitig als Aufnahme- bzw. Aussonderstellung des Auffangbehälters 2. In dieser zweiten Stellung ist der zweite Auffangbehälter 2 mit seinen beiden Verschlußklappen 15, 16 seitlich nach rechts weggeschwenkt.

Die Verschlußklappe 13 ist um eine linke Schwenkachse 19 schwenkbar. Die Verschlußklappe 14 und die Verschlußklappe 16 sind um eine untere Schwenkachse 20 schwenkbar. Die Verschlußklappe 15 ist um eine rechte Schwenkachse 21 schwenkbar.

Über zwei nicht gezeigte Antriebe können die Verschlußklappen 15, 16 in der ersten Stellung der Auffangbehälteranordnung 10 bzw. die Verschlußklappen 13, 14 in der zweiten ersten Stellung der Auffangbehälteranordnung 10 geöffnet und geschlossen werden.

Darüberhinaus können die Verschlußklappen 13, 14 auch in der ersten Stellung der Auffangbehälteranordnung 10 bzw. die Verschlußklappen 15, 16 auch in der zweiten Stellung der Auffangbehälteranordnung 10 geöffnet und geschlossen werden. Wie in Fig. 3 und Fig. 4 dargestellt, ist eine Vorrichtung 17 zum Betätigen der Verschlußklappen 13, 14 in der ersten Stellung der Auffangbehälteranordnung 10 zu sehen. Eine Vorrichtung zum Betätigen der Verschlußklappen 15,16 in der zweiten Stellung der Auffangbehälteranordnung 10 ist nicht gezeigt. Sie ist baugleich in symmetrischer Anordnung zur nachfolgend beschriebenen Vorrichtung 17 für die Verschlußklappen 13, 14 ausgeführt.

Die Vorrichtung 17 weist einen Antrieb 22 mit einem Mitnehmer 23 und ein Sperrgelenk 24 auf.
Der Antrieb 22 bewegt den Mitnehmer 23 zwischen einer ersten Lage, wie in Fig. 3 dargestellt, und einer zweiten Lage, wie in Fig. 4 dargestellt.
Das Sperrgelenk 24 ist um einen Drehpunkt 25 in vertikaler Richtung innerhalb eines durch nicht gezeigte Anschläge begrenzten Bereiches schwenkbar, und in Fig. 3 in seiner Ruhelage gezeigt. An seinem dem Drehpunkt 25 abgewandten Ende weist das Sperrgelenk 24 eine Rolle 26 auf, welche in einem ersten Angriffspunkt 27 des Sperrgelenks 24 horizontal angebracht ist. Antrieb 22 und Sperrgelenk 24 sind so angeordnet, daß der Mitnehmer 23 bei seiner Bewegung von seiner ersten Lage in seine zweite Lage die Rolle 26 mit einer vertikal nach unten gerichteten Kraft beaufschlagt.

Im ersten Angriffspunkt 27 des Sperrgelenks 24 ist ein erster Gelenkhebel 31 mit seinem einen Ende drehbar um den ersten Angriffspunkt 27 angebracht. Mit seinen anderen Ende ist der erste Gelenkhebel 31 drehbar um einen zweiten Angriffspunkt 28, welcher im oberen Abschnitt der Verschlußklappe 13 vorgesehen ist, angebracht. In der Ruhelage des Sperrgelenks 24 liegen die Achsen des Drehpunktes 25, des ersten Angriffspunktes 27 und des zweiten Angriffspunktes 28 in einer Ebene.

Der obere Abschnitt der Verschlußklappe 13 weist einen dritten Angriffspunkt 29 auf. Ein zweiter Gelenkhebel 32 ist mit seinem einen Ende drehbar um den dritten Angriffspunkt 29 angebracht. Der zweite Gelenkhebel 32 ist mit seinem anderen Ende drehbar um einen vierten Angriffspunkt 30, welcher im oberen Abschnitt der Verschlußklappe 14 vorgesehen ist, angebracht. Die Verschlußklappen 13 und 14 sind somit über diesen zweiten Gelenkhebel 32 miteinander gekoppelt.

Schwenkt die Auffangbehälteranordnung 10' mit den 2 Auffangbehältern 11 und 12 von der zweiten in die gezeigte erste Stellung, so befindet sich der Mitnehmer 23 erfindungsgemäß in seiner ersten Lage, wie in Fig. 3 dargestellt. Entsprechend befindet sich das Sperrgelenk 24 in Ruhelage. Ein Schwenken der Verschlußklappe 13 um die linke Schwenkachse 19 ist in dieser Position zunächst blockiert, da hierfür eine Bewegung des zweiten Angriffspunktes 28 in Richtung zum Drehpunkt 25 erforderlich ist. Diese Bewegung wird jedoch verhindert, da die Achsen des Drehpunktes 25, des ersten Angriffspunktes 27 und des zweiten Angriffspunktes 28 in einer Ebene liegen und eine Schubkraft im ersten Gelenkhebel 31 über das Sperrgelenk 24 im Drehpunkt 25 aufgenommen wird. Da die Verschlußklappe 13 über den zweiten Gelenkhebel 32 mit der Verschlußklappe 14 gekoppelt ist, kann sich die Verschlußklappe 14 nur gemeinsam mit der Verschlußklappe 13 bewegen. Mit anderen Worten: Die Verschlußklappe 14 ist gegen eine Schwenkbewegung um die untere Schwenkachse 20 verriegelt, solange sich die Verschlußklappe 13 nicht um die linke Schwenkachse 19 bewegt.

Wird nun, wie in Fig. 4 dargestellt, der Antrieb 22 betätigt, so daß der Mitnehmer 23 von seiner ersten in seine zweite Lage bewegt wird, so wird die Rolle 26 um einen Winkel gegen den Uhrzeigersinn um den Drehpunkt 25 bewegt. Der erste Gelenkhebel 31 folgt mit seinem einen Ende in seinem ersten Angriffspunkt 27 dieser Bewegung, wodurch die Verschlußklappe 13 über den zweiten Angriffspunkt 28 des ersten Gelenkhebels 31 um die linke Schwenkachse 19 im Uhrzeigersinn geschwenkt wird. Der zweite Gelenkhebel 32 wird durch die Schwenkbewegung der Verschlußklappe 13 in Richtung des vierten Angriffspunktes 30 bewegt, wodurch die Verschlußklappe 14 gegen den Uhrzeigersinn um die untere Schwenkachse 20 geschwenkt wird. Die Verschlußklappen 13, 14 öffnen sich und darin eingeschlossenes Produkt fällt heraus, um von einem Aufnahmecontainer 33 aufgenommen zu werden.
Ein vergleichbarer Aufnahmecontainer 33 befindet sich sinngemäß auch auf der gegenüberliegenden Seite der Produktempfangsvorrichtung 7 für die Verschlußklappen 15, 16.

Die Längen der Gelenkhebel 31, 32, die Lage der Angriffspunkte 27, 28, 29, 30 und die Lage des Sperrgelenks 24 sind vom Fachmann so zu wählen, daß die Verschlußklappen 13, 14 abhängig von der Lage des Mitnehmers 23 geöffnet oder geschlossen sind.

Durch einen nicht gezeigten Rückstellmechanismus, der in einer Ausführungsform mit einer am Sperrgelenk 24 angreifenden Rückstellfeder gebildet wird, wird das Sperrgelenk 24 wieder in seine Ruhelage bewegt, sobald der Mitnehmer 23 vom Antrieb 22 wieder in seine erste Lage bewegt wird.

Bei einer weiteren Ausführungsform sind nicht nur zwei sondern drei oder mehr Produktzuführvorrichtungen und entsprechende Auffangbehälter bzw. Aufnahmecontainer vorgesehen. Die Auffangbehälter werden in einer entsprechenden Reihenfolge mittig über dem Öffnungsquerschnitt der Produktempfangsvorrichtung 7 positioniert.

Der zeitliche Ablauf der Bewegung der Auffangbehälteranordnung 10 bzw. entsprechender separater Auffangbehälter und des Öffnens und Schließens der Auffangbehälter 11, 12 zum Aussondern in die Aufnahmecontainer mittels Vorrichtung 17 oder zur Weitergabe in die Produktempfangsvorrichtung 7 über die nicht gezeigten Antriebe kann über eine programmierbare Steuerung koordiniert werden. Die Steuerung der Antriebsvorrichtung(en) ist in geeigneter Weise mit der Steuerung des Produktbereitstellungssystems 3 und der Verpackungsmaschine 8 synchronisiert.

## Patentansprüche

1. Produktausgabevorrichtung für ein Produktbereitstellungssystem (3), mit
einer ersten Produktzuführvorrichtung (1) mit einem zugehörigen ersten Auffangbehälter (11) und einer zweiten Produktzuführvorrichtung (2) mit einem zugehörigen zweiten Auffangbehälter (12), wobei die Auffangbehälter (11, 12) an ihrer Unterseite jeweils einen Verschluß (13, 14; 15, 16) aufweisen, wobei das Produktbereitstellungssystem (3) über die Produktzuführvorrichtungen (1,2) bereitgestellte Produktmengen (4, 5, 6) an eine Produktempfangsvorrichtung (7), die einen vorgegebenen Öffnungsquerschnitt aufweist, ausgibt,
wobei
jeder Auffangbehälter (11, 12) zum Ausgeben einer Produktmenge (4, 5, 6) in eine Ausgabestellung und zum Aufnehmen einer Produktmenge (4, 5, 6) in eine Aufnahmestellung bewegbar ist;
**gekennzeichnet durch** jeweils eine Vorrichtung (17) zum Öffnen des Verschlusses (13, 14; 15, 16) in der Aufnahmestellung;

2. Produktausgabevorrichtung nach Anspruch 1, **dadurch gekennzeichnet,**
**daß** die Auffangbehälter (11, 12) Teil einer Auffangbehälteranordnung (10) sind, die derart bewegbar ist, daß jeweils einer der Auffangbehälter in seine Ausgabestellung bewegt ist.

3. Produktausgabevorrichtung nach Anspruch 1 oder 2, **dadurch gekennzeichnet,**
**daß** jede Produktzuführvorrichtung (1, 2) eine Auslaßöffnung aufweist, unterhalb derer der entsprechende Auffangbehälter (11, 12) derart angeordnet ist, daß dieser in jeder Stellung eine von dem Produktbereitstellungssystem (3) in die Produktzuführvorrichtung (1, 2) abgegebene Produktmenge (5, 6) auffangen kann.

4. Produktausgabevorrichtung nach einem der Ansprüche 1 bis 3, **dadurch gekennzeichnet,**
**daß** der Verschluß jedes Auffangbehälters aus zwei relativ zueinander schwenkbaren Verschlußklappen (13, 14; 15, 16) besteht.

5. Produktausgabevorrichtung nach einem der Ansprüche 1 bis 4, **dadurch gekennzeichnet,**
**daß** die Vorrichtung (17) einen Antrieb (22), ein Sperrgelenk (24) und Gelenkhebel (31, 32) aufweist.

## Claims

1. A product-dispensing device for a product-delivery system (3), having
a first product-supply device (1) with an associated first collecting container (11) and a second product-supply device (2) with an associated second collecting container (12), wherein the collecting containers (11, 12) have a respective closure (13, 14; 15, 16) on their underside in each case, wherein the product-delivery system (3) dispenses quantities of the products (4, 5, 6) delivered by way of the product-supply devices (1, 2) to a product-receiving device (7) which has a pre-set opening cross-section,
wherein each collecting container (11, 12) is movable into a dispensing position in order to dispense a quantity of the products (4, 5, 6) and into a receiving position in order to receive a quantity of the products (4, 5, 6),
**characterized by** a respective device (17) for opening the closure (13, 14; 15, 16) in the receiving position.

2. A product-dispensing device according to Claim 1, **characterized in that** the collecting containers (11, 12) are part of a collecting-container arrangement (10) which is movable in such a way that one of the collecting containers is moved into its dispensing position in each case.

3. A product-dispensing device according to Claim 1 or 2, **characterized in that** each product-supply device (1, 2) has an outlet opening, below which the corresponding collecting container (11, 12) is arranged in such a way that in any position it can collect a quantity of the products (5, 6) discharged by the product-delivery system (3) into the product-supply device (1, 2).

4. A product-dispensing device according to one of Claims 1 to 3, **characterized in that** the closure of each collecting container comprises two closure flaps (13, 14; 15, 16) which can be pivoted relative to each other.

5. A product-dispensing device according to one of Claims 1 to 4, **characterized in that** the device (17) has a drive (22), a locking joint (24) and an articulated lever (31, 32).

## Revendications

1. Distributeur de produit pour un système de distribution de produit (3) avec
un premier dispositif d'alimentation en produit (1), avec un premier récipient collecteur de produit (11) correspondant et un deuxième dispositif d'alimentation en produit (2) avec un deuxième récipient collecteur de produit (12) correspondant, les récipients collecteurs de produit (11, 12) comprenant chacun sur leur face inférieure un obturateur (13, 14 ; 15, 16), le système de distribution de produit (3) débitant par les dispositifs d'alimentation en produit (1, 2) des quantités de produit distribué (4, 5, 6) à un dispositif récepteur de produit (7) doté d'une section d'ouverture définie d'avance,
moyennant quoi
chaque récipient collecteur de produit (11, 12) peut être déplacé dans une position de distribution pour débiter une quantité de produit (4, 5, 6) et dans une position de réception pour recueillir une quantité de produit (4, 5, 6) ; **caractérisé par** un dispositif (17) pour ouvrir respectivement l'obturateur (13, 14 ; 15, 16) dans la position de réception.

2. Distributeur de produit selon la revendication 1, **caractérisé en ce que**
les récipients collecteurs (11, 12) font partie d'un arrangement de récipients collecteurs (10) qui peuvent être déplacés de telle sorte qu'un des récipients collecteurs respectivement soit déplacé dans sa position de distribution.

3. Distributeur de produit selon l'une des revendications 1 ou 2, **caractérisé en ce que**
chaque dispositif d'alimentation en produit (1, 2) comprend une ouverture de sortie en dessous de laquelle le récipient collecteur de produit (11, 12) correspondant est disposé de telle sorte que celui-ci peut recueillir dans chaque position une quantité de produit (5, 6) distribuée dans le dispositif d'alimentation en produit (1, 2) par le système de distribution de produit (3).

4. Distributeur de produit selon l'une quelconque des revendications 1 à 3, **caractérisé en ce que**
l'obturateur de chaque récipient collecteur consiste en deux clapets de fermeture (13, 14 ; 15, 16) basculants l'un par rapport à l'autre.

5. Distributeur de produit selon l'une quelconque des revendications 1 à 4, **caractérisé en ce que**
le dispositif (17) comprend un entraînement (22), une articulation de verrouillage (24) et un levier articulé (31, 32).
